# EUROPEAN PATENT APPLICATION

(11) **EP 4 606 855 A1**
(43) Date of publication of application: **27.08.2025**
(21) Application number: 23879891.2
(22) Date of filing: 20.10.2023
(51) Int. Cl.: C08L 35/04, C08F 222/34, H01B 5/14, H01G 4/32, H01G 7/02

(54) **RESIN COMPOSITION, AND MOLDED PRODUCT AND FILM USING RESIN COMPOSITION**

(30) Priority: 21.10.2022 JP 2022169440
(71) Applicant: Kuraray Co., Ltd., Kurashiki-shi, Okayama 710-0801 (JP)
(72) Inventor: IISHIBA Kazuki, Tsukuba-shi, Ibaraki 305-0841 (JP); INATOMI Atsushi, Tsukuba-shi, Ibaraki 305-0841 (JP)
(74) Representative: Müller-Boré & Partner Patentanwälte PartG mbB
(86) International application number: PCT/JP2023/038030
(87) International publication number: WO 2024/085249

(57) **Abstract**

A resin composition capable of providing a film or the like that can suppress coloration even after heating is provided. Further, a molded product, a film, a conductive film, a film capacitor, a polarized material, an electrostatic induction conversion device, and a touch panel using the resin composition are provided. A resin composition including: a copolymer (A) containing a constitutional unit (a1) derived from 1,1-dicyanoethylene and a constitutional unit (a2) derived from a compound represented by the following general formula (I); and a Bronsted acidic compound (B), in which a content of the Bronsted acidic compound (B) in the resin composition is 0.1 to 95,000 ppm by mass.

## Description

### Technical Field

The present invention relates to a resin composition containing a copolymer containing a constitutional unit derived from 1,1-dicyanoethylene and a constitutional unit derived from a specific polymerizable monomer and a Bronsted acidic compound, and the like.

### Background Art

A resin composition containing a copolymer obtained by radical polymerization of 1,1-dicyanoethylene and a polymerizable monomer has excellent transparency when processed into a film, and thus is suitably used for various materials such as optical members, lighting members, signboard members, and decorative members (for example, PTL 1).

### Citation List

### Patent Literature

PTL 1: JPH01-103614A

### Summary of Invention

### Technical Problem

As mentioned above, a film using a resin composition containing a copolymer of 1,1-dicyanoethylene and a polymerizable monomer is excellent in transparency and dielectric properties, but there has been a problem that it is colored by heating and the appearance is impaired.

The present invention has been made in view of the above conventional problem, and an object is to provide a resin composition capable of providing a film or the like that can suppress coloration even after heating and is also excellent in dielectric properties. Further, another object of the present invention is to provide a molded product, a film, a conductive film, a film capacitor, a polarized material, an electrostatic induction conversion device, and a touch panel using the resin composition.

### Solution to Problem

As a result of studies, the present inventors have found that a crosslinked structure is formed between nitrile groups present in a side chain of a copolymer (between nitrile groups derived from 1,1-dicyanoethylene) or between the nitrile group and a substituent group of a side chain derived from another monomer constituting the copolymer, and a conjugated structure in which double bonds are partially connected is formed, and as a result, coloration occurs by heating. In addition, as a result of further studies to suppress the coloration, it has been found that the conjugated structure can be stabilized by blending a specific amount of a Bronsted acidic compound in the resin composition, the coloration can be alleviated, and the dielectric properties are also excellent, thereby completing the present invention.

That is, the present invention provides the following [1] to [21].
[1] A resin composition including: a copolymer (A) containing a constitutional unit (a1) derived from 1,1-dicyanoethylene and a constitutional unit (a2) derived from a compound represented by the following general formula (I); and a Bronsted acidic compound (B), in which a content of the Bronsted acidic compound (B) in the resin composition is 0.1 to 95,000 ppm by mass:

   CH₂ = CR¹R² (I)

   In the general formula (I), R¹ is one or more selected from a hydrogen atom, an alkyl group, a cycloalkyl group, an aryl group, an alkoxy group, and a halogen atom; and
   R² is one or more selected from a hydrogen atom, an alkyl group, an alkoxy group, a carboxy group, an ester group represented by -COOR³, in which R³ is an alkyl group having 1 to 12 carbon atoms, an acid anhydride group, an acyl group represented by -COR⁴, in which R⁴ is an alkyl group having 1 to 12 carbon atoms, and an acyloxy group represented by -OCOR⁵, in which R⁵ is an alkyl group having 1 to 12 carbon atoms.
[2] The resin composition according to [1], in which the compound represented by the general formula (I) is one or more selected from the group consisting of a vinyl ester, a (meth)acrylic acid ester, a styrene derivative, isobutylene, and propylene.
[3] The resin composition according to [1] or [2], in which the Bronsted acidic compound (B) has an acid dissociation constant (pKa) of 4.8 or less.
[4] The resin composition according to any of [1] to [3], in which the Bronsted acidic compound (B) is a compound having one or more selected from the group consisting of a phosphoric acid group, a carboxy group, a sulfonic acid group, and a phosphorus acid group.
[5] The resin composition according to any of [1] to [4], in which the constitutional unit (a2) is composed of two different constitutional units of a constitutional unit (a21) derived from the compound represented by the general formula (I) and a constitutional unit (a22) derived from the compound represented by the general formula (I).
[6] The resin composition according to any of [1] to [5], in which a composition ratio [S/N] of a sulfur atom to a nitrogen atom is 3.5×10⁻⁸ to 0.3.
[7] The resin composition according to any of [1] to [6], in which a composition ratio [P/N] of a phosphorus atom to a nitrogen atom is 1.4×10⁻⁸ to 0.3.
[8] A molded product using the resin composition according to any of [1] to [7].
[9] A film using the resin composition according to any of [1] to [7].
[10] The film according to [9], in which a yellowness index after heating at 160°C under normal pressure for 1 hour is 3.0% or less.
[11] A conductive film obtained by laminating a conductive layer on the film according to [9] or [10].
[12] A film capacitor including the film according to [9] or [10].
[13] A film capacitor including the conductive film according to [11].
[14] A polarized material including the resin composition according to any of [1] to [7].
[15] A polarized material including the film according to [9] or [10].
[16] The polarized material according to [14], including the resin composition, in which, in the general formula (I), R¹ contains H and R² contains an acyloxy group represented by -OCOR⁵, in which R⁵ is an alkyl group having 1 to 12 carbon atoms.
[17] The polarized material according to [15], including the resin composition, in which, in the general formula (I), R¹ contains H and R² contains an acyloxy group represented by -OCOR⁵, in which R⁵ is an alkyl group having 1 to 12 carbon atoms.
[18] An electrostatic induction conversion device including the polarized material according to [14].
[19] An electrostatic induction conversion device including the polarized material according to [15].
[20] A touch panel including the electrostatic induction conversion device according to [18].
[21] A touch panel including the electrostatic induction conversion device according to [19]. Advantageous Effects of Invention

According to the present invention, it is possible to provide a resin composition capable of providing a film or the like that can suppress coloration even after heating and further, is also excellent in dielectric properties. In addition, the present invention can provide a molded product, a film, a conductive film, a film capacitor, a polarized material, an electrostatic induction conversion device, and a touch panel using the resin composition.

### Description of Embodiments

### [Resin Composition]

The resin composition of the present invention includes: a copolymer (A) containing a constitutional unit (a1) derived from 1,1-dicyanoethylene and a constitutional unit (a2) derived from a compound represented by the following general formula (I); and a Bronsted acidic compound (B), in which a content of the Bronsted acidic compound (B) in the resin composition is 0.1 to 95,000 ppm by mass:
Since the resin composition of the present invention contains a specific amount of a Bronsted acidic compound, the partial conjugated structure of the side chain of the copolymer (A), which causes coloration, can be stabilized, and as a result, coloration due to heating can be suppressed.

   CH₂ = CR¹R² (I)

   In the general formula (I), R¹ is one or more selected from a hydrogen atom, an alkyl group, a cycloalkyl group, an aryl group, an alkoxy group, and a halogen atom; and
R² is one or more selected from a hydrogen atom, an alkyl group, an alkoxy group, a carboxy group, an ester group represented by -COOR³ (R³ is an alkyl group having 1 to 12 carbon atoms), an acid anhydride group, an acyl group represented by -COR⁴ (R⁴ is an alkyl group having 1 to 12 carbon atoms), and an acyloxy group represented by -OCOR⁵ (R⁵ is an alkyl group having 1 to 12 carbon atoms.)

### <Copolymer (A)>

The copolymer (A) used in the present invention contains a constitutional unit (a1) derived from 1,1-dicyanoethylene and a constitutional unit (a2) derived from the compound represented by the general formula (I).

### [Constitutional Unit (a1) Derived from 1,1-Dicyanoethylene]

The copolymer (A) used in the present invention contains a constitutional unit (a1) derived from 1,1-dicyanoethylene. Since 1,1-dicyanoethylene provides a copolymer having high transparency by radical polymerization, it can be suitably used as a material for a molded product or the like requiring transparency.

1,1-dicyanoethylene can be produced by the production method described in J. Am. Chem. Soc., 1989, 111, 9078 to 9081 or US 2476270B.

### [Constitutional Unit (a2) Derived from Compound Represented by General Formula (I)]

The copolymer (A) used in the present invention contains a constitutional unit (a2) derived from a compound represented by the following general formula (I).

CH₂ = CR¹R² (I)

In the general formula (I), R¹ is one or more selected from a hydrogen atom, an alkyl group, a cycloalkyl group, an aryl group, an alkoxy group, and a halogen atom; and
R² is one or more selected from a hydrogen atom, an alkyl group, an alkoxy group, a carboxy group, an ester group represented by -COOR³ (R³ is an alkyl group having 1 to 12 carbon atoms), an acid anhydride group, an acyl group represented by -COR⁴ (R⁴ is an alkyl group having 1 to 12 carbon atoms), and an acyloxy group represented by -OCOR⁵ (R⁵ is an alkyl group having 1 to 12 carbon atoms.)

In the general formula (I), R¹ is one or more selected from a hydrogen atom, an alkyl group, a cycloalkyl group, an aryl group, an alkoxy group, and a halogen atom.

The alkyl group of R¹ is preferably an alkyl group having 1 to 12 carbon atoms, and examples thereof include a methyl group, an ethyl group, an n-propyl group, an isopropyl group, an n-butyl group, an iso-butyl group, a sec-butyl group, a tert-butyl group, an n-pentyl group, an isopentyl group, a neopentyl group, an n-hexyl group, a heptyl group, an octyl group, a decyl group, and a dodecyl group.

The cycloalkyl group of R¹ is preferably a cycloalkyl group having 3 to 12 carbon atoms, and examples thereof include a cyclopropyl group, a cyclobutyl group, a cyclopentyl group, and a cyclohexyl group.

The aryl group of R¹ is preferably an aryl group having 6 to 20 carbon atoms, and examples thereof include a phenyl group, a tolyl, a xylyl group, and a naphthyl group.

The alkoxy group of R¹ is preferably an alkoxy group having 1 to 10 carbon atoms, and examples thereof include a methoxy group, an ethoxy group, an n-propoxy group, an isopropoxy group, an n-butoxy group, an isobutoxy group, a sec-butoxy group, and a tert-butoxy group.

Examples of the halogen atom of R¹ include a fluoride atom, a chloride atom, a bromide atom, and an iodine atom.

Among these, R¹ is preferably a hydrogen atom, an alkyl group having 1 to 6 carbon atoms, or an aryl group having 6 to 20 carbon atoms, more preferably a hydrogen atom, an alkyl group having 1 to 4 carbon atoms, or a phenyl group, and further more preferably a hydrogen atom, a methyl group, or a phenyl group, from the viewpoint of suppressing coloration after heating of a molded product using the resin composition of the present invention.

**In** the general formula (I), R² represents one or more selected from a hydrogen atom, an alkyl group, an alkoxy group, a carboxy group, an ester group represented by -COOR³ (R³ represents an alkyl group having 1 to 12 carbon atoms), an acid anhydride group, an acyl group represented by -COR⁴ (R⁴ is an alkyl group having 1 to 12 carbon atoms), and an acyloxy group represented by -OCOR⁵ (R⁵ is an alkyl group having 1 to 12 carbon atoms).

The alkyl group of R² is preferably an alkyl group having 1 to 12 carbon atoms, and examples thereof include a methyl group, an ethyl group, an n-propyl group, an isopropyl group, an n-butyl group, an iso-butyl group, a sec-butyl group, a tert-butyl group, an n-pentyl group, an isopentyl group, a neopentyl group, an n-hexyl group, a heptyl group, an octyl group, a decyl group, and a dodecyl group.

The alkoxy group of R² is preferably an alkoxy group having 1 to 10 carbon atoms, and examples thereof include a methoxy group, an ethoxy group, an n-propoxy group, an isopropoxy group, an n-butoxy group, an isobutoxy group, a sec-butoxy group, and a tert-butoxy group.

R² may be an ester group represented by -COOR³, and R³ represents an alkyl group having 1 to 12 carbon atoms, and examples thereof include a methyl group, an ethyl group, an n-propyl group, an isopropyl group, an n-butyl group, iso-butyl group, a sec-butyl group, a tert-butyl group, an n-pentyl group, an isopentyl group, a neopentyl group, an n-hexyl group, a heptyl group, an octyl group, a decyl group, and a dodecyl group.

Examples of the acid anhydride group of R² include acid anhydride groups derived from phthalic anhydride, maleic anhydride, trimellitic anhydride, pyromellitic anhydride, hexahydrophthalic anhydride, tetrahydrophthalic anhydride, methylnadic anhydride, nadic anhydride, glutaric anhydride, dimethylglutaric anhydride, diethylglutaric anhydride, succinic anhydride, methylhexahydrophthalic anhydride, and methyltetrahydrophthalic anhydride.

R² may be an acyl group represented by -COR⁴, and R⁴ represents an alkyl group having 1 to 12 carbon atoms, and examples thereof include a methyl group, an ethyl group, an n-propyl group, an isopropyl group, an n-butyl group, an iso-butyl group, a sec-butyl group, a tert-butyl group, an n-pentyl group, an isopentyl group, a neopentyl group, an n-hexyl group, a heptyl group, an octyl group, a decyl group, and a dodecyl group.

R² may be an acyloxy group represented by -OCOR⁵, and R⁵ is an alkyl group having 1 to 12 carbon atoms, and examples thereof include a methyl group, an ethyl group, an n-propyl group, an isopropyl group, an n-butyl group, an iso-butyl group, a sec-butyl group, a tert-butyl group, an n-pentyl group, an isopentyl group, a neopentyl group, an n-hexyl group, a heptyl group, an octyl group, a decyl group, and a dodecyl group.

Among these, R² is preferably one selected from the group consisting of a hydrogen atom, an alkyl group, an ester group represented by -COOR³, and an acyloxy group represented by *-OCOR⁵,* more preferably a hydrogen atom, an alkyl group having 1 to 6 carbon atoms, an ester group represented by -COOR³ (in this case, R³ is an alkyl group having 1 to 6 carbon atoms), and an acyloxy group represented by -OCOR⁵ (in this case, R⁵ is an alkyl group having 1 to 6 carbon atoms), more preferably a hydrogen atom, an alkyl group having 1 to 4 carbon atoms, an ester group represented by -COOR³ (in this case, R³ is an alkyl group having 1 to 4 carbon atoms), an acyloxy group represented by -OCOR⁵ (in this case, R⁵ is an alkyl group having 1 to 4 carbon atoms), and further more preferably an acyloxy group represented by - OCOR⁵ (in this case, R⁵ is an alkyl group having 1 to 4 carbon atoms), from the viewpoint of suppressing coloration of a molded product after heating using the resin composition of the present invention.

More specifically, from the viewpoint of suppressing coloration, the compound represented by the general formula (I) is preferably one or more selected from the group consisting of vinyl ester, (meth)acrylic acid ester, a styrene derivative, isobutylene, and propylene, specifically, more preferably one or more selected from the group consisting of vinyl acetate, vinyl propionate, vinyl butyrate, vinyl isobutyrate, methyl methacrylate, methyl acrylate, ethyl acrylate, butyl acrylate, styrene, isobutylene, and propylene, and further more preferably one or more selected from the group consisting of vinyl acetate, vinyl propionate, vinyl butyrate, methyl methacrylate, styrene, isobutylene, and propylene. By using these compounds, discoloration can be more effectively suppressed. When it is used as a polarized material, one or more selected from the group consisting of vinyl acetate, vinyl propionate, and vinyl butyrate are particularly preferable from the viewpoint of excellent piezoelectricity.

The compound represented by the general formula (I) is easily available from commercial products, and can also be produced by a known method.

Note that, in the present specification, "(meth)acrylic acid ester" means "acrylic acid ester or methacrylic acid ester".

The copolymer (A) may have two or more kinds of constitutional unit (a2) different from each other, and from the viewpoint of the balance between the effect of suppressing coloration and the production cost, the constitutional unit (a2) is preferably composed of two different constitutional units of a constitutional unit (a21) derived from the compound represented by the general formula (I) and a constitutional unit (a22) derived from the compound represented by the general formula (I). When the constitutional unit (a2) is composed of two kinds of the constitutional unit (a21) and the constitutional unit (a22), the compounds represented by the general formula (I) constituting each constitutional unit are preferably two kinds selected from the group consisting of vinyl acetate, vinyl propionate, vinyl butyrate, methyl methacrylate, styrene, isobutylene, and propylene.

### [Content of Each Constitutional Unit in Copolymer (A)]

The content of the constitutional unit (a1) in the copolymer (A) is preferably 20 to 80 mol%, preferably 30 to 70 mol%, and further more preferably 40 to 60 mol%.

On the other hand, the content of the constitutional unit (a2) is preferably 20 to 80 mol%, preferably 30 to 70 mol%, and further more preferably 40 to 60 mol%.

When the content of each constitutional unit is within the above range, a molded product using the copolymer (A) is less likely to be colored even after heating.

Note that the content of each constitutional unit can be measured by ¹H-NMR, and specifically, can be measured by the method described in Examples.

### [Other Constitutional Units]

The copolymer (A) can contain a constitutional unit derived from a monomer other than the constitutional unit (a1) derived from 1,1-dicyanoethylene and the constitutional unit (a2) derived from the compound represented by the general formula (I). The other constitutional units are not particularly limited, and examples thereof include an aromatic vinyl compound such as α-methylstyrene and tert-butylstyrene.

When the copolymer (A) contains a constitutional unit derived from other monomers, the content thereof is preferably 20 mol% or less, more preferably 10 mol% or less, and further more preferably 5 mol% or less, in the copolymer.

### [Triad Structure of Each Constitutional Unit in Copolymer (A)]

The copolymer (A) may contain the following four triad structures (U-1) to (U-4) composed of the constitutional unit (a1) and the constitutional unit (a2). Note that, as mentioned above, the constitutional unit (a2) may be two or more kinds.

(a1)-(a1)-(a1) ... (U-1)

(a1)-(a1)-(a2) ... (U-2)

(a2)-(a1)-(a1) ... (U-3)

(a2)-(a1)-(a2) ... (U-4)

"(a1)-(a1)-(a1)", which is one of the four triad structures, means a triad structure in which three constitutional units (a1) derived from 1,1-dicyanoethylene are consecutively bonded, "(a1)-(a1)-(a2)" means a triad structure in which two constitutional units (a1) derived from 1,1-dicyanoethylene are consecutively bonded and then a constitutional unit (a2) derived from the compound represented by the general formula (I) is bonded, and the other triad structures mean the same.

The amount of the triad structure (U-1) means "the content (mol%) of (a1) bonded between two (a1) in the structure of (a1)-(a1)-(a1) constituting (U-1)". Similarly, the content of the triad structure (U-2) means "the content (mol%) of (a1) bonded between (a1) and (a2) in the structure of (a1)-(a1)-(a2) constituting (U-2)", and the contents of other triad structures mean the same.

Note that the content of each of the triad structures (U-1) to (U-4) in the present invention can be measured by ¹³C-NMR, and specifically, can be measured by the method described in Examples.

The total content of (U-2) and (U-3) in the total amount of the four triad structures of the copolymer (A) is usually 25.0 mol% or less. The total content of (U-2) and (U-3) in the total amount of the four triad structures is more preferably 9.0 mol% or less, more preferably 8.5 mol% or less, more preferably 8.0 mol% or less, more preferably 7.5 mol% or less, more preferably 7.0 mol% or less, more preferably 6.0 mol% or less, more preferably 5.5 mol% or less, more preferably 5.3 mol% or less, more preferably 5.0 mol% or less, more preferably 4.8 mol% or less, and further more preferably 4.3 mol% or less, from the viewpoint of reducing the amount of an arrangement causing coloration due to heat, specifically, an arrangement in which (a1) is continuous, and effectively suppressing coloration together with the effect of the Bronsted acidic compound. The lower limit value is usually 0.1 mol% or more, but may be 0.1 mol% or less.

Note that the total content of the (U-2) and (U-3) can be adjusted at a relatively low temperature of less than 50°C and by controlling the charges amount of the monomer.

The content of (U-1) in the total amount of the four triad structures is preferably 1.8 mol% or less. When the content of (U-1) is equal to or less than the upper limit value, the amount of an arrangement in which (a1) is continuous in the copolymer is reduced, and as a result, the coloration after heating of the molded product using the copolymer of the present invention is further suppressed. From the above viewpoint, the content of the (U-1) in the total amount of the four triad structures is preferably 1.7 mol% or less, more preferably 1.5 mol% or less, more preferably 1.0 mol% or less, more preferably 0.5 mol% or less, and further more preferably substantially 0 mol%.

In the total amount of the four triad structures, (U-4) is preferably 90 mol% or more, more preferably 94 mol% or more, and further more preferably 99 mol% or more.

### [Glass Transition Temperature of Copolymer (A)]

The glass transition temperature of the copolymer (A) is not particularly limited, and may be appropriately selected depending on the application.

### [Method for Producing Copolymer (A)]

The method for producing the copolymer (A) is not particularly limited, and the copolymer (A) is preferably produced at a polymerization temperature of lower than 50°C, and further, in the presence of a radical initiator and the Bronsted acidic compound (B). When it is produced under the above conditions, coloration of the film produced from the resin composition can be suppressed. From this viewpoint, the polymerization temperature is preferably 47°C or lower, and more preferably 45°C or lower.

### (Radical Polymerization Initiator)

Examples of the radical polymerization initiator used in the production of the copolymer (A) include azo compounds such as azobisisobutyronitrile, 2,2'-azobis (4-methoxy-2,4-dimethylvaleronitrile), 2,2'-azobis [2-(2-imidazoline-2-yl) propane], and 2,2'-azobis [N-(2-carboxyethyl)-2-methylpropionamidine] hydrate; inorganic peroxides such as sodium persulfate, potassium persulfate, and hydrogen peroxide; organic peroxides such as t-butyl hydroperoxide, cumene hydroperoxide, and p-menthane hydroperoxide; and redox initiators obtained by combining an oxidizing agent and a reducing agent such as hydrogen peroxide and an iron (II) salt, and a persulfate and sodium hydrogen sulfite. These can be used alone or in combination of two or more kinds thereof.

When the copolymer (A) is subjected to radical polymerization at a low temperature as mentioned above, the arrangement of the monomer units constituting the copolymer (A) can be arranged so as to be an arrangement with less coloration. Therefore, among these radical polymerization initiators, azo compounds such as azobisisobutyronitrile and 2,2'-azobis (4-methoxy-2,4-dimethylvaleronitrile), redox initiators, and the like, which are easily used at a low temperature, are preferable.

The amount of the radical polymerization initiator used is preferably 0.01 to 10 parts by mass, more preferably 0.05 to 5 parts by mass, and further more preferably 0.08 to 3 parts by mass, with respect to 100 parts by mass of all the monomers as raw materials of the copolymer (A).

### (Ratio of Charged Amount in Production of Copolymer (A))

In the production of the copolymer (A), the charged amount of the compound represented by the general formula (I) is preferably 0.9 equivalent or more, more preferably 1.0 equivalent or more with respect to the charged amount of 1,1-dicyanoethylene, and usually preferably 5.0 equivalent or less from the viewpoint of the transparency of the film. When the charged amount of the compound represented by the general formula (I) with respect to the charged amount of 1,1-dicyanoethylene is equal to or more than the above-described lower limit value, the reaction can be efficiently performed.

### (Bronsted Acidic Compound (B) Used in Production of Copolymer (A))

In the present invention, a Bronsted acidic compound (B) mentioned later may be used in the production of the copolymer (A). By allowing the Bronsted acidic compound (B) to be present in the production of the copolymer (A), the partially conjugated structure of the side chain which causes coloration immediately after the copolymer (A) is produced can be stabilized. When the Bronsted acidic compound (B) is used, the use amount thereof is preferably 0.01 to 10 parts by mass, more preferably 0.05 to 5 parts by mass, and further more preferably 0.08 to 3 parts by mass, with respect to 100 parts by mass of all the monomers as raw materials of the copolymer (A).

### [Content of Copolymer (A) in Resin Composition]

The content of the copolymer (A) in the resin composition of the present invention is preferably 80% by mass or more, more preferably 85% by mass or more, and further more preferably 90% by mass or more. When the content of the copolymer (A) in the resin composition is within the above range, it is possible to obtain a film with less coloration at the time of heating.

### <Bronsted Acidic Compound (B)>

The resin composition of the present invention further contains a Bronsted acidic compound. When the resin composition of the present invention contains a Bronsted acidic compound, the conjugated structure of the copolymer (A) can be stabilized, and coloration of a film produced using the resin composition at the time of heating can be suppressed.

The content of the Bronsted acidic compound (B) in the resin composition of the present invention is 0.1 to 95,000 ppm by mass, preferably 0.5 to 90,000 ppm by mass, more preferably 0.8 to 85,000 ppm by mass, more preferably 0.8 to 50,000 ppm by mass, more preferably 1 to 30,000 ppm by mass, more preferably 5 to 10,000 ppm by mass, more preferably 5 to 9,000 ppm by mass, more preferably 10 to 5,000 ppm by mass, and further more preferably 20 to 2,000 ppm by mass. When the content of the Bronsted acidic compound (B) is within the above range, the conjugated structure of the copolymer (A) can be stabilized, and coloration of a film produced using the resin composition at the time of heating can be suppressed.

The acid dissociation constant (pKa) of the Bronsted acidic compound (B) used in the present invention is preferably 4.8 or less, more preferably 3.0 or less, further more preferably 2.5 or less, and still further more preferably 2.0 or less. When the acid dissociation constant (pKa) of the Bronsted acidic compound (B) is within the above range, the copolymer (A) is further more easily stabilized, and coloration can be suppressed.

Note that the value of pKa means an acid dissociation constant of a conjugate acid in water at 25°C, and can be calculated from the concentration of the substance and the hydrogen ion concentration by measuring the hydrogen ion concentration using a pH meter.

The Bronsted acidic compound that can be used in the present invention is not particularly limited, and examples thereof include mineral acids such as sulfuric acid, hydrochloric acid, nitric acid, phosphoric acid, hydrobromic acid, and a partially neutralized salt thereof, organic acids such as formic acid, acetic acid, trifluoroacetic acid, trichloroacetic acid, dichloroacetic acid, phenylphosphonic acid, ethylphosphinic acid, methanesulfonic acid, ethanesulfonic acid, 2-propanesulfonic acid, trifluoromethanesulfonic acid, benzenesulfonic acid, and p-toluenesulfonic acid, and a combination thereof. Further, compounds exhibiting Bronsted acidity by reacting with water, such as sulfur dioxide or diphosphorus pentoxide, can be used.

Among these, a compound having one or more selected from the group consisting of a phosphoric acid group, a carboxy group, a sulfonic acid group, and a phosphorus acid group is preferable, and specifically, phosphoric acid, acetic acid, methanesulfonic acid, p-toluenesulfonic acid, and the like are preferable, and methanesulfonic acid and p-toluenesulfonic acid are more preferable.

### <Optional Component>

The resin composition of the present invention is not particularly limited as long as it contains the copolymer (A) and the Bronsted acidic compound (B), and may contain other synthetic resins.

Examples of other synthetic resins include a polyolefin resin such as polyethylene, polypropylene, a copolymer of ethylene and one or more α-olefin having 3 to 20 carbon atoms (for example, propylene, 1-butene, 1-pentene, 1-hexene, and the like), an ethylene-propylene-diene copolymer (EPDM), an ethylene-vinyl acetate copolymer, and an ethylene-acrylic acid copolymer, a polyurethane resin, a polyamide resin, a polyester resin, and a polycarbonate resin.

Further, the resin composition of the present invention can further contain other components, as necessary. Examples of the other components can include a solvent, a filler, a thickener, an anti-aging agent, a plasticizer, a flame retardant, a stabilizer, and an antioxidant.

When the resin composition of the present invention contains optional components, that is, the synthetic resins and other components, the total content thereof is preferably 30% by mass or less, more preferably 20% by mass or less, and further more preferably 10% by mass or less, with respect to the total amount of the resin composition.

### <Method for Producing Resing Composition>

The method for producing the resin composition is not particularly limited, and the resin composition can be produced by a production method including a mixing step of mixing the copolymer (A), the Bronsted acidic compound (B), and the optional component used as necessary. Note that the method for mixing each of the components is not particularly limited, and it can be mixed by a known method.

### <Composition Ratio of Elements in Resin Composition >

In the resin composition of the present invention, the composition ratio [S/N] of the sulfur atom to the nitrogen atom is preferably 3.5×10⁻⁸ to 0.3, more preferably 0.5×10⁻⁵ to 0.25, and further more preferably 0.5×10⁻⁴ to 0.2. When the composition ratio [S/N] of the sulfur atom to the nitrogen atom in the resin composition is within the above range, the transparency of the film can be maintained even after heating for a long time.

In addition, in the resin composition of the present invention, the composition ratio [P/N] of the phosphorus atom to the nitrogen atom is preferably 1.4×10⁻⁸ to 0.3, more preferably 1.0×10⁻⁵ to 0.05, and further more preferably 1.0×10⁻⁴ to 0.01. When the composition ratio [P/N] of the phosphorus atom to the nitrogen atom in the resin composition is within the above range, the transparency of the film can be maintained even after heating for a long time.

Note that the composition ratio can be measured by elemental analysis.

### [Molded Product and Film]

The molded product and the film of the present invention use the resin composition of the present invention. The shape of the molded product is not limited as long as it is produced using the resin composition of the present invention, and examples thereof include various shapes such as a film, a pellet, a sheet, a plate, a pipe, a tube, a fiber, a non-woven fabric, a rod-shaped body, and a granular body.

The method for producing the molded product is not particularly limited, and it can be molded by various conventionally known molding methods, for example, a solution casting method, injection molding, blow molding, press molding, extrusion molding, calender molding. Further, the molded product of the present invention may be a laminate with another material.

Examples of the molded product using the resin composition of the present invention include a film capacitor, an insulating layer of an EL element, an electrostatic induction conversion device, a sensor (for example, a touch sensor, a vibration sensor, a biometric sensor, or a tire sensor (a sensor installed on the inner surface of a tire)), an actuator, a touch panel, a haptic device (a device having a function of feedback of a tactile sense to a user), a vibration power generation apparatus (for example, a vibration power generation floor or a vibration power generation tire), a speaker, a microphone, a damping sheet, a hollow yarn membrane for water purification, and a resist film.

The molded product of the present invention is preferably a film. As mentioned above, since the molded product using the resin composition of the present invention can suppress coloration even after heating, by processing it into a film, a film having a more excellent appearance can be obtained.

In the film of the present invention, since coloration can be suppressed even after heating, the difference between the yellowness index of the film before heating and the yellowness index of the film after heating at 50°C under normal pressure for 24 hours is preferably 1.5% or less, more preferably 1.0% or less, and further more preferably 0.8% or less.

Note that, in the case of the solution casting method, the "film before heating" refers to a film prepared by applying the resin composition of the present invention and then vacuum-drying it at 40°C in 1 kPa for 7 days.

In addition, the difference between the yellowness index of the film before heating and the yellowness index of the film after heating at 160°C under normal pressure for 1 hour is preferably 3.0% or less, more preferably 2.6% or less, more preferably 2.0% or less, more preferably 1.8% or less, more preferably 1.6% or less, more preferably 1.5% or less, and further more preferably 1.1% or less.

The yellowness index of the film in the present invention is a yellowness index measured in accordance with JIS Z8722:2009, and specifically, can be measured by a method described in Examples.

The film of the present invention before heating preferably has a low yellowness index, and the yellowness index after heating in 1 kPa at 40°C under normal pressure for 7 days is preferably 1.0% or less, more preferably 0.8% or less, more preferably 0.5% or less, and further more preferably 0.4% or less.

The film of the present invention preferably has a low yellowness index after heating, and the yellowness index after heating at 160°C under normal pressure for 1 hour is preferably 3.0% or less, more preferably 2.8% or less, more preferably 2.7% or less, more preferably 2.5% or less, more preferably 2.3% or less, more preferably 2.1% or less, more preferably 2.0% or less, more preferably 1.9% or less, and further more preferably 1.6% or less.

The thickness of the film of the present invention is not particularly limited, and is preferably 0.001 to 5.0 mm, more preferably 0.005 to 1.5 mm, and further more preferably 0.01 to 1.0 mm, from the viewpoint of achieving both transparency and cutting processability of the film.

The method for producing the film of the present invention is not particularly limited, and it can be molded by a conventionally known method. Examples of the molding method include a solution casting method, a melt extrusion method, a calender method, a compression molding method, and an injection molding method. Further, the molded product of the present invention may be a laminate with another material.

### [Conductive Film and Film Capacitor]

The conductive film of the present invention is obtained by laminating a conductive layer on the film, and the film capacitor of the present invention includes the film or the conductive film.

Since the conductive film of the present invention uses the film of the present invention having excellent relative permittivity, it exhibits excellent performance as a film capacitor.

The conductive layer constituting the conductive film is not particularly limited, and is generally a layer formed of a conductive metal such as aluminum, zinc, gold, platinum, or copper, and is preferably a metal foil or a metal coating (for example, a vapor-deposited metal coating), and both can be used in combination. Among these, a vapor-deposited metal coating is preferable from the viewpoint of thinning the conductive layer and increasing the capacitance with respect to the volume, the viewpoint of improving the adhesion to the dielectric body, and further, the viewpoint of reducing the variation in the thickness.

For the purpose of imparting moisture resistance, the vapor-deposited metal coating may be a multilayer structure in which a semiconductor aluminum oxide layer is further formed on the aluminum layer as described in, for example, JPH02-250306A.

The thickness of the vapor-deposited metal coating is not particularly limited, and is preferably 10 to 200 nm, and more preferably 20 to 100 nm. When the thickness of the vapor-deposited metal coating is within the above range, both the capacitance and the strength of the capacitor can be achieved, which is preferable.

When a vapor-deposited metal coating is used as the conductive layer, the method for forming the coating is not particularly limited, and for example, a vacuum vapor deposition method, a sputtering method, an ion plating method can be adopted, and usually, a vacuum vapor deposition method is preferable.

Examples of the method of forming the conductive layer include a batch method applied to a molded product, a semi-continuous (semi-continuous) method applied to a long product, and a continuous (air-to-air) method, and a semi-continuous method which is the mainstream is preferable. The metal deposition method of the semi-continuous method is a method in which metal deposition is performed in a vacuum system, and after winding, the vacuum system is returned to an atmosphere system, and the deposited film is taken out.

The film for a film capacitor preferably has a high relative permittivity from the viewpoint of easily increasing the capacitance of the capacitor. Since the film containing the resin composition of the present invention has a high relative permittivity, it is suitable for a film capacitor application. The relative permittivity of the film measured under the conditions of 1 kHz at 25°C is preferably 3 or more, more preferably 3.5 or more, more preferably 3.6 or more, more preferably 3.7 or more, more preferably 3.8 or more, more preferably 4.0 or more, more preferably 4.2 or more, more preferably 4.4 or more, more preferably 4.5 or more, more preferably 4.6 or more, more preferably 4.8 or more, and further more preferably 5.0 or more. The permittivity of the film can be measured by forming a metal coating on both surfaces thereof to form a film capacitor and measuring the permittivity of the film capacitor by a method mentioned later.

**In** the film capacitor application, the compound represented by the general formula (I) constituting the copolymer (A) is preferably vinyl ester, (meth)acrylic acid ester, a styrene derivative, isobutylene, or propylene, more preferably vinyl ester, (meth)acrylic acid ester, a styrene derivative, or isobutylene, more preferably vinyl acetate, vinyl propionate, vinyl butyrate, isopropenyl acetate, vinyl chloroacetate, methyl methacrylate, methyl acrylate, butyl acrylate, styrene, α-methylstyrene, or isobutylene, and further more preferably vinyl acetate, vinyl propionate, vinyl butyrate, methyl methacrylate, styrene, or isobutylene, from the viewpoint of being less likely to be affected by a change in relative permittivity.

### [Polarized Material]

The polarized material of the present invention includes the resin composition of the present invention or the film of the present invention.

The polarized material of the present invention refers to a material exhibiting piezoelectricity (d₃₃). Note that, when the d₃₃ cannot be directly measured as in the case of a fiber or the like, the piezoelectricity of the fiber can be confirmed by depositing the fiber and processing it into a film shape, or by preparing a film from the same composition as that used for the fiber and measuring the d₃₃ of the film.

The polarized material can be obtained, for example, by subjecting the film of the present invention to a poling treatment. Examples of the poling treatment include a method of heating the heat-treated molded product to a predetermined temperature, applying a direct current-high electric field or a direct current-high electric field synergized with an alternate current-electric field to the front and back of the molded product in a state as it is for a certain period of time, and then slowly cooling or rapidly cooling it. In addition, examples also include a method of applying a direct current-high electric field or a direct current high-electric field synergized with an alternate current-electric field from the front and back of the molded product for a certain period of time simultaneously with the heat treatment, and then slowly cooling or rapidly cooling it.

Regarding the treatment temperature, the poling treatment is preferably performed at a temperature equal to or higher than a temperature 30°C lower than the glass transition temperature (Tg) of the heat-treated molded product. In general, the polarization treatment is preferably performed using a metal foil, a metal plate, a conductive paste, or a metal coating film formed by vacuum deposition or chemical plating, which is brought in close contact with both surfaces of the molded product, as an electrode. In general, the application voltage is preferably 10 KV/cm or more and an electric field intensity at which breakdown does not occur, and more preferably 100 to 1500 KV/cm. The treatment time is not particularly limited, and is preferably 1 minute to 5 hours, and more preferably 10 minutes to 2 hours, with respect to the molded product subjected to the heat treatment.

In the polarized material application, the compound represented by the general formula (I) constituting the copolymer (A) is preferably vinyl ester or (meth)acrylic acid ester, more preferably vinyl ester, and further more preferably vinyl acetate, vinyl propionate, or vinyl butyrate, particularly due to the excellent polarization performance.

The poling treatment can also be performed by a corona discharge treatment. For the corona discharge, either negative corona or positive corona may be used, and it is preferable to use negative corona from the viewpoint of ease of polarization of the non-polarized film.

The corona discharge treatment is not particularly limited, and examples thereof include a method of applying a voltage to a non-polarized film using a linear electrode, as described in JP2011-181748A, a method of applying a voltage to a non-polarized film using a needle-shaped electrode, and a method of applying a voltage to a non-polarized film using a grid electrode.

The conditions of the corona discharge treatment can be appropriately set based on the common knowledge in the relevant technical field. When the conditions of the corona discharge treatment are too low, there is a possibility that the piezoelectricity of the film to be obtained may be insufficient, whereas when the conditions of the corona discharge treatment are too high, there is a possibility that the film to be obtained may have a spot defect.

In order to suppress the in-plane variation in the piezoelectric constant d₃₃ of the polarized film to be obtained, it is preferable that the distance between each of the needle-shaped electrodes and/or the linear electrode and the film is constant, that is, there is no (or extremely small) in-plane variation of the film in the distance between the electrode and the film, and specifically, the difference between the longest and shortest distances is preferably 6 mm or less, more preferably 4 mm or less, and further more preferably 3 mm or less.

In addition, for example, when the voltage is continuously applied in a roll-to-roll manner, it is preferable that the film is appropriately and uniformly brought in close contact with the roll by applying a constant tension to the film. For example, when the voltage is continuously applied in a roll-to-roll manner using linear electrodes, the direct current-electric field is preferably -50 to -1 kV, and the treatment rate is preferably 10 to 1200 cm/minute, although it varies depending on the distance between the linear electrode and the non-polarized film, the thickness of the film, and the like.

Examples of the polarization treatment include, in addition to corona discharge, a method in which the polarization treatment is applied by sandwiching a non-polarized film between plate electrodes from both surfaces thereof. In this case, it is preferably performed in a direct current-electric field in a range of preferably 0 to 400 MV/m and more preferably 50 to 400 MV/m, for an application time in a range of 0.1 seconds to 60 minutes.

### [Electrostatic Induction Conversion Device and Touch Panel]

The electrostatic induction conversion device of the present invention includes the polarized material of the present invention, and the touch panel of the present invention includes the electrostatic induction conversion device of the present invention.

The electrostatic induction conversion device may be incorporated in an apparatus such as a vibration-type power generator, an actuator, or a sensor, in addition to the touch panel. The electrostatic induction conversion device and the touch panel of the present invention are derived from the resin composition or the film of the present invention, and are useful in terms of durability and the like particularly when used outdoors.

### Examples

Hereinafter, the present invention is described in detail with reference to Examples, but the present invention is not limited to these Examples.

### <Example 1>

Into a four-necked flask of 100 ml equipped with a stirring apparatus, a Dimroth condenser, and a thermometer, 2.0 g of 1,1-dicyanoethylene (0.026 mol) synthesized by the method described in the above-mentioned literature, 5.5 g of vinyl acetate (0.064 mol, manufactured by FUJIFILM Wako Pure Chemical Corporation), 25 ml of ethyl acetate (manufactured by FUJIFILM Wako Pure Chemical Corporation), and 18 mg of 2,2'-azobis (4-methoxy-2,4-dimethylvaleronitrile) were added, 68 mg of p-toluenesulfonic acid monohydrate (manufactured by Tokyo Chemical Industry Co., Ltd.) was added, and the mixture was heated and stirred at 40°C under a nitrogen gas stream for 6 hours to perform radical polymerization.

After termination of the polymerization, the precipitated copolymer (A) was filtered. Subsequently, washing was performed with ethyl acetate and n-hexane (manufactured by FUJIFILM Wako Pure Chemical Corporation) in this order, and then drying was performed overnight at 40°C under reduced pressure to obtain a product (a powder of a resin composition containing the copolymer (A)).

The spectrum of the obtained resin composition containing the copolymer (A) was measured by NMR by the method mentioned later. The results are shown in Table 1.

As a result of performing elemental analysis of the obtained resin composition containing the copolymer (A), it was a resin composition containing 10 ppm by mass of p-toluenesulfonic acid. Note that the remainder of the resin composition was the copolymer (A).

Subsequently, the obtained resin composition containing the copolymer (A) was dissolved in a solvent (N,N-dimethylacetamide [manufactured by Tokyo Chemical Industry Co., Ltd.]), applied by a solution casting method using a film applicator (manufactured by Tester Sangyo Co., Ltd.) so as to have a thickness of 50 µm, and vacuum-dried in 1 kPa at 40°C for 7 days to prepare a film (1) [film before heating].

As a result of subjecting the obtained film (1) to ¹H-NMR and elemental analysis, the content percentage of p-toluenesulfonic acid was 10 ppm by mass.

Further, the yellowness index of the film (1) was measured using a haze meter SH7000 (manufactured by Nippon Denshoku Industries Co., Ltd.) in accordance with JIS Z8722:2009. Note that, the values at three points of the film (1) were measured, and the average value thereof was adopted as the yellowness index. The results are shown in Table 1.

Thereafter, the film (1) was heated in a clean oven DE-41 (manufactured by Yamato Scientific Co., Ltd.) at 50°C under atmosphere pressure for 24 hours to obtain a film (2). The yellowness index of the film (2) was also measured in the same manner as the film (1). The results are shown in Table 1.

Further, the film (2) was heated at 160°C under atmosphere pressure for 1 hour to obtain a film (3). The yellowness index of the film (3) was also measured in the same manner as the film (1). The results are shown in Table 1.

### <Example 2>

The product (the powder of the resin composition containing the copolymer (A)) obtained in Example 1 was further washed with ethyl acetate and n-hexane repeatedly a plurality of times and dried, and then films (1) to (3) were prepared in the same manner as in Example 1. The obtained films (1) to (3) were subjected to ¹H-NMR, the elemental analysis, and the measurement of the yellowness index in the same manner as in Example 1. The results are shown in Table 1.

### <Example 3>

The product obtained in Example 1 (the powder of the resin composition containing the copolymer (A)) and p-toluenesulfonic acid monohydrate were dissolved in a solvent (N,N-dimethylacetamide [manufactured by Tokyo Chemical Industry Co., Ltd.]) so that the content percentage of p-toluenesulfonic acid in the film was 100 ppm by mass, and films (1) to (3) were prepared in the same manner as in Example 1. The obtained films (1) to (3) were subjected to ¹H-NMR, the elemental analysis, and the measurement of the yellowness index in the same manner as in Example 1. The results are shown in Table 1.

### <Examples 4 to 12>

Films (1) to (3) were prepared in the same manner as in Example 1 except that the materials shown in Tables 1 and 2 were used, the copolymer (A) was produced so as to have the composition and the molar ratio shown in Tables 1 and 2, and the resin compositions having the compositions shown in Tables 1 and 2 were obtained. The obtained films (1) to (3) were subjected to ¹H-NMR, the elemental analysis, and the measurement of the yellowness index in the same manner as in Example 1. The results are shown in Tables 1 and 2.

### <Example 13>

Into a four-necked flask of 100 ml equipped with a stirring apparatus, a Dimroth condenser, and a thermometer, 2.0 g of 1,1-dicyanoethylene (0.026 mol) synthesized by the method described in the above-mentioned literature, 2.7 g of styrene (0.026 mol, manufactured by FUJIFILM Wako Pure Chemical Corporation), 17 ml of toluene (manufactured by FUJIFILM Wako Pure Chemical Corporation), and 18 mg of 2,2'-azobis (4-methoxy-2,4-dimethylvaleronitrile) were added, 34 mg of p-toluenesulfonic acid monohydrate (manufactured by Tokyo Chemical Industry Co., Ltd.) was added, and the mixture was heated and stirred at 40°C under a nitrogen gas stream for 4 hours to perform radical polymerization.

After termination of the polymerization, the precipitated copolymer (A) was filtered. Subsequently, washing was performed with toluene and n-hexane (manufactured by FUJIFILM Wako Pure Chemical Corporation) in this order, and then drying was performed overnight at 40°C under reduced pressure to obtain a product (a powder of a resin composition containing the copolymer (A)). Except for this, films (1) to (3) were prepared in the same manner as in Example 1, and subjected to ¹H-NMR, the elemental analysis, and the measurement of the yellowness index. The results are shown in Table 3.

### <Example 14>

Into an autoclave of 300 ml equipped with a stirring apparatus and a thermometer, 2.0 g of 1,1-dicyanoethylene (0.026 mol) synthesized by the method described in the above-mentioned literature, 2.7 g of propylene (0.064 mol, manufactured by Takachiho Chemical Industrial Co., Ltd.), 8.9 ml of ethyl acetate (manufactured by FUJIFILM Wako Pure Chemical Corporation), and 18 mg of 2,2'-azobis (4-methoxy-2,4-dimethylvaleronitrile) were added, and 34 mg of p-toluenesulfonic acid monohydrate (manufactured by Tokyo Chemical Industry Co., Ltd.) was added, and the mixture was heated and stirred at 40°C under a nitrogen gas stream for 6 hours to perform radical polymerization.

After termination of the polymerization, the precipitated copolymer (A) was filtered. Subsequently, washing was performed with toluene and n-hexane (manufactured by FUJIFILM Wako Pure Chemical Corporation) in this order, and then drying was performed overnight at 40°C under reduced pressure to obtain a product (a powder of a resin composition containing the copolymer (A)). Except for this, films (1) to (3) were prepared in the same manner as in Example 1, and subjected to ¹H-NMR, the elemental analysis, and the measurement of the yellowness index. The results are shown in Table 3.

### <Example 15>

Into an autoclave of 300 ml equipped with a stirring apparatus and a thermometer, 2.0 g of 1,1-dicyanoethylene (0.026 mol) synthesized by the method described in the above-mentioned literature, 3.6 g of isobutylene (0.064 mol, manufactured by Tokyo Chemical Industry Co., Ltd.), 6.7 ml of ethyl acetate (manufactured by FUJIFILM Wako Pure Chemical Corporation), 18 mg of 2,2'-azobis (4-methoxy-2,4-dimethylvaleronitrile), and 18 mg of p-toluenesulfonic acid monohydrate (manufactured by Tokyo Chemical Industry Co., Ltd.) were added, and the mixture was heated and stirred at 40°C under a nitrogen gas stream for 6 hours to perform radical polymerization.

After termination of the polymerization, the precipitated copolymer (A) was filtered. Subsequently, washing was performed with ethyl acetate and n-hexane (manufactured by FUJIFILM Wako Pure Chemical Corporation) in this order, and then drying was performed overnight at 40°C under reduced pressure to obtain a product (a powder of a resin composition containing the copolymer (A)). Except for this, films (1) to (3) were prepared in the same manner as in Example 1, and subjected to ¹H-NMR, the elemental analysis, and the measurement of the yellowness index. The results are shown in Table 3.

### <Example 16>

Into a four-necked flask of 100 ml equipped with a stirring apparatus, a Dimroth condenser, and a thermometer, 2.0 g of 1,1-dicyanoethylene (0.026 mol) synthesized by the method described in the above-mentioned literature, 2.8 g of vinyl acetate (0.032 mol, manufactured by FUJIFILM Wako Pure Chemical Corporation), 3.7 g of vinyl butyrate (0.032 mol, manufactured by FUJIFILM Wako Pure Chemical Corporation), 25 ml of ethyl acetate (manufactured by FUJIFILM Wako Pure Chemical Corporation), 18 mg of 2,2'-azobis (4-methoxy-2,4-dimethylvaleronitrile), and 18 mg of p-toluenesulfonic acid monohydrate (manufactured by Tokyo Chemical Industry Co., Ltd.) were added, and the mixture was heated and stirred at 40°C under a nitrogen gas stream for 6 hours to perform radical polymerization.

After termination of the polymerization, the precipitated copolymer (A) was filtered. Subsequently, washing was performed with ethyl acetate and n-hexane (manufactured by FUJIFILM Wako Pure Chemical Corporation) in this order, and then drying was performed overnight at 40°C under reduced pressure to obtain a product (a powder of a resin composition containing the copolymer (A)). Films (1) to (3) were prepared in the same manner as in Example 1, and subjected to ¹H-NMR, the elemental analysis, and the measurement of the yellowness index. The results are shown in Table 3.

### <Example 17>

Films (1) to (3) were prepared in the same manner as in Example 16 except that the use amount of vinyl acetate was changed to 3.6 g (0.039 mol, manufactured by FUJIFILM Wako Pure Chemical Corporation), and 3.9 g of vinyl propionate (0.039 mol, manufactured by Tokyo Chemical Industry Co., Ltd.) was used instead of vinyl butyrate, and subjected to ¹H-NMR, the elemental analysis, and the measurement of the yellowness index. The results are shown in Table 3.

### <Example 18>

Films (1) to (3) were prepared in the same manner as in Example 17 except that 68 mg of p-toluenesulfonic acid monohydrate (manufactured by Tokyo Chemical Industry Co., Ltd.) was added. The obtained films (1) to (3) were subjected to ¹H-NMR, the elemental analysis, and the measurement of the yellowness index in the same manner as in Example 1. The results are shown in Table 3.

### <Example 19>

Into a four-necked flask of 100 ml equipped with a stirring apparatus, a Dimroth condenser, and a thermometer, 2.0 g of 1,1-dicyanoethylene (0.026 mol) synthesized by the method described in the above-mentioned literature, 1.4 g of styrene (0.013 mol, manufactured by FUJIFILM Wako Pure Chemical Corporation), 1.3 g of methyl methacrylate (0.013 mol, manufactured by FUJIFILM Wako Pure Chemical Corporation), 17 ml of toluene (manufactured by FUJIFILM Wako Pure Chemical Corporation), 18 mg of 2,2'-azobis (4-methoxy-2,4-dimethylvaleronitrile), and 18 mg of p-toluenesulfonic acid monohydrate (manufactured by Tokyo Chemical Industry Co., Ltd.) were added, and the mixture was heated and stirred at 40°C under a nitrogen gas stream for 4 hours to perform radical polymerization.

After termination of the polymerization, the precipitated copolymer (A) was filtered. Subsequently, washing was performed with toluene and n-hexane (manufactured by FUJIFILM Wako Pure Chemical Corporation) in this order, and then drying was performed overnight at 40°C under reduced pressure to obtain a product (a powder of a resin composition containing the copolymer (A)).

Films (1) to (3) were prepared in the same manner as in Example 4, and subjected to ¹H-NMR, the elemental analysis, and the measurement of the yellowness index. The results are shown in Table 3.

### <Examples 20 to 24 and Comparative Examples 1 to 4>

Films (1) to (3) were prepared in the same manner as in Example 1 except that the materials shown in Tables 4 and 5 were used, the copolymers (A) were produced so as to have the compositions and the molar ratios shown in Tables 4 and 5, and the resin compositions having the compositions shown in Tables 4 and 5 were obtained. In Comparative Example 1, polymerization was performed without using p-toluenesulfonic acid monohydrate to prepare films (1) to (3). The obtained films were subjected to ¹H-NMR, the elemental analysis, and the measurement of the yellowness index. The results are shown in Tables 4 and 5.

The relative permittivity of the obtained films was further measured by the method mentioned later. The results are shown in Tables 1 to 5.

As shown in Tables 1 to 5, each of the films of the present invention can suppress the yellowness index to be low and has a high relative permittivity. Such a material having a high relative permittivity is suitable for use in a film capacitor as described in JP2008-034189A.

Further, the obtained films were subjected to a polarization treatment, and the piezoelectricity of each film was evaluated by the method mentioned later. The results are shown in Table 6.

As shown in Table 6, each of the films of the present invention can suppress the yellowness index to be low, and further, is also excellent in piezoelectricity, and thus is suitable as a transparent piezoelectric film for an application requiring transparency such as a touch panel application.

### <Measurement Method>

### (1) Measurement of Spectrum of Resin Composition Containing Copolymer (A) by NMR

Using a nuclear magnetic resonance spectrometer (NMR), the ¹H-NMR spectrum of the product (the powder of the resin composition containing the copolymer (A)) was measured under the following conditions.

### [¹H-NMR Measurement Conditions]

Apparatus: JNM-ECX400 JEOL Ltd.
Measurement solvent: Dimethyl Sulfoxide-d6
Measurement temperature: 65°C Chemical shift value standard: Tetramethylsilane

### [¹³C-NMR Measurement Conditions]

Apparatus: JNM-ECX400 JEOL Ltd.
Measurement solvent: Dimethyl Sulfoxide-d6
Measurement temperature: 65°C
Measurement Method: Proton decoupling method
Pulse width: 45 degrees
Pulse repetition time: 10 seconds
Chemical shift value standard: Tetramethylsilane

### (2) Elemental Analysis of Film

The elemental analysis of the films was performed using a micro amount-sulfur analyzing apparatus TS-2100H (manufactured by Nittoseiko Analytech Co., Ltd.) for sulfur, iCAP7400 Duo (manufactured by ThermoFIsher) for phosphorus, and FLASH2000 (manufactured by Thermoscientific) for carbon, hydrogen, oxygen, and nitrogen.

### (3) Measurement of Yellowness Index of Film

The yellowness index of the obtained films was measured using a haze meter SH7000 (manufactured by Nippon Denshoku Industries Co., Ltd.) in accordance with JIS Z8722:2009. The values at three points of each film were measured, and the average value thereof was adopted as the yellowness index. Note that, in each Table, "Film (1)" refers to a film vacuum-dried in 1 kPa at 40°C for 7 days, "Film (2)" refers to a film obtained by heating the film (1) in a clean oven DE-41 (manufactured by Yamato Scientific Co., Ltd.) at 50°C under atmosphere pressure for 24 hours, and further, "Film (3)" refers to a film obtained by heating the film (2) at 160°C under atmosphere pressure for 1 hour.

### (4) Measurement of Relative Permittivity of Film

Each of the films obtained in Examples and Comparative Examples was humidity-controlled at 26°C and 60% RH, and then Au-Pd alloy having a diameter of 30 mm was vapor-deposited on the surface of the film until the conduction of the surface was achieved, and vapor deposition was also performed on the opposite surface to form a conductive layer, thereby obtaining a sample of a film capacitor.

The capacitance (C) of the sample was measured using an LCR meter (manufactured by Keysight Technologies), and the relative permittivity (25°C, 1 kHz) was calculated from the capacitance, the area of the electrode (S), and the thickness of the film (d) using the formula C = ε × ε₀ × S/d (ε₀ is a permittivity in vacuum).

### (5) Evaluation of Piezoelectricity

Both surfaces of the film obtained in each of Examples and Comparative Examples were subjected to a polarization treatment at 160°C via a gold electrode formed by vacuum deposition, and the piezoelectricity evaluation of the obtained polarized material was performed. The piezoelectric constant d₃₃ was measured using a piezometer system PM300 manufactured by PIEZOTEST Ltd. to determine whether the piezoelectric material was usable. In the measurement of the piezoelectric constant d₃₃, the sample was clipped at 1.0 N, and the charge generated when the force of 2.0 N at a frequency of 110 Hz was applied was read, and a material in which the value of the d₃₃ was 1 pC/N or more and the positive and negative signs of the charge were reversed on both surfaces of the film was determined to have the piezoelectricity of "pass". The results are shown in Table 6.

### [Table 1]

**Table 1**

| | | Examples | | | | | | |
|---|---|---|---|---|---|---|---|---|
| | | 1 | 2 | 3 | 4 | 5 | 6 | 7 |
| Kind of Constitutional Unit (a2) | (a21) | Vinyl Acetate | Vinyl Acetate | Vinyl Acetate | Vinyl Acetate | Vinyl Acetate | Vinyl Acetate | Vinyl Acetate |
| | (a22) | - | - | - | - | - | - | - |
| Molar Ratio in Copolymer (a1)/(a21)/(a22) (*1) | | 50/50/0 | 50/50/0 | 50/50/0 | 50/50/0 | 50/50/0 | 50/50/0 | 50/50/0 |
| Each Content of Four Triad Structures in Copolymer (*2) | (a1)-(a1)-(a1) [(U-1)] (mol%) | 0.3 | 0.3 | 0.3 | 0.3 | 0.3 | 0.3 | 0.3 |
| | Total Content of (a1)-(a1)-(a2) (a2)-(a1)-(a1) [(U-2)] and [(U-3)] (mol%) | 4.8 | 4.8 | 4.8 | 4.8 | 4.8 | 4.8 | 4.8 |
| | (a2)-(a1)-(a2) [(U-4)] (mol%) | 94.9 | 94.9 | 94.9 | 94.9 | 94.9 | 94.9 | 94.9 |
| Thickness of Film (µm) | | 50 | 50 | 50 | 50 | 50 | 50 | 50 |
| Bronsted Acidic Compound (B) | Kind | p-Toluene sulfonic Acid | p-Toluene sulfonic Acid | p-Toluene sulfonic Acid | p-Toluene sulfonic Acid | p-Toluene sulfonic Acid | p-Toluene sulfonic Acid | p-Toluene sulfonic Acid |
| | pKa | -1.3 | -1.3 | -1.3 | -1.3 | -1.3 | -1.3 | -1.3 |
| | Amount (ppm by mass) | 10 | 1 | 100 | 2,000 | 5,000 | 9,000 | 10,000 |

### [Table 1] (Continued)

**Table 1**

| | | Examples | | | | | | |
|---|---|---|---|---|---|---|---|---|
| | | 1 | 2 | 3 | 4 | 5 | 6 | 7 |
| Elemental Analysis of Film (% by mass) | C | 59 | 59 | 59 | 59 | 58 | 58 | 58 |
| | H | 4.9 | 4.9 | 4.9 | 4.9 | 4.9 | 4.9 | 4.9 |
| | O | 20 | 20 | 19 | 20 | 20 | 20 | 20 |
| | N | 17 | 17 | 17 | 17 | 17 | 17 | 17 |
| | S | 0.00019 | 0.000019 | 0.0019 | 0.037 | 0.093 | 0.17 | 0.19 |
| | P | Lower Detection Limit | Lower Detection Limit | Lower Detection Limit | Lower Detection Limit | Lower Detection Limit | Lower Detection Limit | Lower Detection Limit |
| | Composition Ratio [S/N] | 0.0000112 | 0.0000011 | 0.0001113 | 0.0021721 | 0.0054761 | 0.0100100 | 0.0112442 |
| | Composition Ratio [P/N] | - | - | - | - | - | - | - |
| Evaluation [Yellowness Index (%)] | Film (1) Before Heating | 0.41 | 0.40 | 0.41 | 0.42 | 0.44 | 0.43 | 0.41 |
| | Film (2) After Heating | 0.50 | 1.38 | 0.42 | 0.43 | 0.44 | 0.43 | 0.41 |
| | Film (3) After Heating | 1.98 | 2.88 | 1.90 | 1.92 | 1.97 | 2.21 | 2.37 |
| | Difference in Yellowness Index (2)-(1) | 0.09 | 0.98 | 0.01 | 0.01 | 0.00 | 0.00 | 0.00 |
| | Difference in Yellowness Index (3)-(1) | 1.57 | 2.48 | 1.49 | 1.50 | 1.53 | 1.78 | 1.96 |
| Evaluation [Relative Permittivity (25°C, 1 KHz)] | | 5.3 | 5.3 | 5.3 | 5.4 | 5.8 | 5.9 | 5.9 |

| | | | | | | | | |
|---|---|---|---|---|---|---|---|---|
| *1: Calculation from Measurement Result of ¹H-NMR *2: Calculation from Measurement Result of ¹³C-NMR | | | | | | | | |

### [Table 2]

**Tabe 2**

| | | Examples | | | | |
|---|---|---|---|---|---|---|
| | | 8 | 9 | 10 | 11 | 12 |
| Kind of Constitutional Unit (a2) | (a21) | Vinyl Acetate | Vinyl Acetate | Vinyl Acetate | Vinyl Acetate | Vinyl Acetate |
| | (a22) | - | - | - | - | - |
| Molar Ratio in Copolymer (a1)/(a21)/(a22) (*1) | | 50/50/0 | 50/50/0 | 50/50/0 | 50/50/0 | 50/50/0 |
| Each Content of Four Triad Structures in Copolymer (*2) | (a1-(a1)-(a1) [(U-1)] (mol%) | 0.3 | 0.3 | 0.3 | 0.3 | 0.3 |
| | Total Content of (a1)-(a1)-(a2) (a2)-(a1)-(a1) [(U-2)] and [(U-3)] (mol%) | 4.8 | 4.8 | 4.8 | 4.8 | 4.8 |
| | (a2)-(a1)-(a2) [(U-4)] (mol%) | 94.9 | 94.9 | 94.9 | 94.9 | 94.9 |
| Thickness of Film (µm) | | 50 | 50 | 50 | 50 | 50 |
| Bronsted Acidic Compound (B) | Kind | p-Toluenesulfonic Acid | p-Toluenesulfonic Acid | Methanesulfonic Acid | Phosphoric Acid | Acetic Acid |
| | pKa | -1.3 | -1.3 | -2.6 | 2.1 | 4.8 |
| | Amount (ppm by mass) | 50,000 | 90,000 | 2,000 | 2,000 | 2,000 |

### [Table 2] (Continued)

**Tabe 2**

| | | Examples | | | | |
|---|---|---|---|---|---|---|
| | | 8 | 9 | 10 | 11 | 12 |
| Elemental Analysis of Film (% by mass) | C | 58 | 58 | 58 | 58 | 59 |
| | H | 4.9 | 4.9 | 4.9 | 4.9 | 5.0 |
| | O | 20 | 20 | 20 | 20 | 19 |
| | N | 16 | 16 | 17 | 17 | 17 |
| | S | 0.93 | 1.7 | 0.067 | Lower Detection Limit | Lower Detection Limit |
| | P | Lower Detection Limit | Lower Detection Limit | Lower Detection Limit | 0.063 | Lower Detection Limit |
| | Composition Ratio [S/N] | 0.0581250 | 0.1062500 | 0.0039333 | - | - |
| | Composition Ratio [P/N] | - | - | - | 0.0036985 | - |
| Evaluation [Yellowness Index (%)] | Film (1) Before Heating | 0.41 | 0.44 | 0.42 | 0.42 | 0.43 |
| | Film (2) After Heating | 0.41 | 0.45 | 0.42 | 0.42 | 0.44 |
| | Film (3) After Heating | 2.70 | 3.00 | 1.46 | 2.42 | 2.38 |
| | Difference in Yellowness Index (2)-(1) | 0.00 | 0.01 | 0.00 | 0.00 | 0.01 |
| | Difference in Yellowness Index (3)-(1) | 2.29 | 2.56 | 1.03 | 2.00 | 1.95 |
| Evaluation [Relative Permittivity (25°C, 1 KHz)] | | 6.3 | - | 5.4 | 5.5 | 5.3 |

| | | | | | | |
|---|---|---|---|---|---|---|
| *1: Calculation from Measurement Result of ¹H-NMR *2: Calculation from Measurement Result of ¹³C-NMR | | | | | | |

### [Table 3]

**Table 3**

| | | Examples | | | | | | |
|---|---|---|---|---|---|---|---|---|
| | | 13 | 14 | 15 | 16 | 17 | 18 | 19 |
| Kind of Constitutional Unit (a2) | (a21) | Styrene | Propylene | Isobutylene | Vinyl Acetate | Vinyl Acetate | Vinyl Acetate | Styrene |
| | (a22) | - | - | - | Vinyl Butyrate | Vinyl Propionate | Vinyl Propionate | Methyl Meth acrylate |
| Molar Ratio in Copolymer (a1)/(a21)/(a22) (*1) | | 50/50/0 | 50/50/0 | 50/50/0 | 50/25/25 | 48/26/26 | 48/26/26 | 50/25/25 |
| Each Content of Four Triad Structures in Copolymer (*2) | (a1)-(a1)-(a1) [(U-1)] (mol%) | 1.7 | 0.0 | 0.0 | 0.2 | 0.2 | 0.2 | 0.8 |
| | Total Content of (a1)-(a1)-(a2) (a2)-(a1)-(a1) [(U-2)] and [(U-3)] (mol%) | 4.3 | 5.3 | 0.7 | 4.6 | 4.5 | 4.5 | 5.4 |
| | (a2)-(a1)-(a2) [(U-4)] (mol%) | 94.0 | 94.7 | 99.3 | 95.2 | 95.3 | 95.3 | 93.8 |
| Thickness of Film (µm) | | 50 | 50 | 50 | 50 | 50 | 50 | 50 |
| Bronsted Acidic Compound (B) | Kind | p-Toluene sulfonic Acid | p-Toluene sulfonic Acid | p-Toluene sulfonic Acid | p-Toluene sulfonic Acid | p-Toluene sulfonic Acid | p-Toluene sulfonic Acid | p-Toluene sulfonic Acid |
| | pKa | -1.3 | -1.3 | -1.3 | -1.3 | -1.3 | -1.3 | -1.3 |
| | Amount (ppm by mass) | 1 | 1 | 1 | 1 | 1 | 10 | 1 |

### [Table 3] (Continued)

**Table 3**

| | | Examples | | | | | | |
|---|---|---|---|---|---|---|---|---|
| | | 13 | 14 | 15 | 16 | 17 | 18 | 19 |
| Elemental Analysis of Film (% by mass) | C | 79 | 70 | 72 | 62 | 60 | 60 | 70 |
| | H | 5.5 | 6.7 | 7.5 | 6.0 | 5.3 | 5.3 | 5.6 |
| | O | 0.000028 | 0.000028 | 0.000028 | 17 | 19 | 19 | 8.9 |
| | N | 15 | 23 | 21 | 13 | 16 | 16 | 16 |
| | S | 0.000019 | 0.000019 | 0.000019 | 0.000019 | 0.000019 | 0.000019 | 0.000019 |
| | P | Lower Detection Limit | Lower Detection Limit | Lower Detection Limit | Lower Detection Limit | Lower Detection Limit | Lower Detection Limit | Lower Detection Limit |
| | Composition Ratio [S/N] | 0.0000013 | 0.0000008 | 0.0000009 | 0.0000015 | 0.0000012 | 0.0000012 | 0.0000012 |
| | Composition Ratio [P/N] | - | - | - | - | - | - | - |
| Evaluation [Yellowness Index (%)] | Film (1) Before Heating | 0.39 | 0.70 | 0.69 | 0.52 | 0.69 | 0.62 | 0.81 |
| | Film (2) After Heating | 0.72 | 0.77 | 0.75 | 0.99 | 1.00 | 0.69 | 0.96 |
| | Film (3) After Heating | 1.43 | 1.10 | 1.08 | 2.71 | 2.50 | 1.89 | 2.10 |
| | Difference in Yellowness Index (2)-(1) | 0.33 | 0.07 | 0.06 | 0.47 | 0.31 | 0.07 | 0.15 |
| | Difference in Yellowness Index (3)-(1) | 1.04 | 0.40 | 0.39 | 2.19 | 1.81 | 1.27 | 1.29 |
| Evaluation [Relative Permittivity (25°C, 1 KHz)] | | 4.6 | 4.2 | 4.0 | 4.0 | 4.0 | 4.1 | 3.9 |

| | | | | | | | | |
|---|---|---|---|---|---|---|---|---|
| *1: Calculation from Measurement Result of ¹H-NMR *2: Calculation from Measurement Result of ¹³C-NMR | | | | | | | | |

### [Table 4]

**Table 4**

| | | Examples | | | Comparative Examples | |
|---|---|---|---|---|---|---|
| | | 20 | 21 | 22 | 1 | 2 |
| Kind of Constitutional Unit (a2) | (a21) | Styrene | Propylene | Isobutylene | Vinyl Acetate | Vinyl Acetate |
| | (a22) | - | - | - | - | - |
| Molar Ratio in Copolymer (a1)/(a21)/(a22) (*1) | | 50/50/0 | 50/50/0 | 50/50/0 | 50/50/0 | 50/50/0 |
| Each Content of Four Triad Structures in Copolymer (*2) | (a1)-(a1)-(a1) [(U-1)] (mol%) | 1.7 | 0.0 | 0.0 | 0.3 | 0.3 |
| | Total Content of (a1)-(a1)-(a2) (a2)-(a1)-(a1) [(U-2)] and [(U-3)] (mol%) | 4.3 | 5.3 | 0.7 | 4.8 | 4.8 |
| | (a2)-(a1)-(a2) [(U-4)] (mol%) | 94.0 | 94.7 | 99.3 | 94.9 | 94.9 |
| Thickness of Film (µm) | | 50 | 50 | 50 | 50 | 50 |
| Bronsted Acidic Compound (B) | Kind | p-Toluene sulfonic Acid | p-Toluene sulfonic Acid | p-Toluene sulfonic Acid | - | p-Toluene sulfonic Acid |
| | pKa | -1.3 | -1.3 | -1.3 | - | -1.3 |
| | Amount (ppm by mass) | 50,000 | 90,000 | 90,000 | - | 100,000 |

### [Table 4] (Continued)

**Table 4**

| | | Examples | | | Comparative Examples | |
|---|---|---|---|---|---|---|
| | | 20 | 21 | 22 | 1 | 2 |
| Elemental Analysis of Film (% by mass) | C | 70 | 68 | 70 | 59 | 58 |
| | H | 7.3 | 6.5 | 7.3 | 4.9 | 4.9 |
| | O | 2.5 | 2.5 | 2.5 | 19 | 20 |
| | N | 19 | 21 | 19 | 17 | 15 |
| | S | 1.7 | 1.7 | 1.7 | Lower Detection Limit | 1.9 |
| | P | Lower Detection Limit | Lower Detection Limit | Lower Detection Limit | Lower Detection Limit | Lower Detection Limit |
| | Composition Ratio [S/N] | 0.0894737 | 0.0809524 | 0.0894737 | - | 0.1236861 |
| | Composition Ratio [P/N] | - | - | - | - | - |
| Evaluation [Yellowness Index (%)] | Film (1) Before Heating | 0.39 | 0.81 | 0.70 | 0.42 | 0.45 |
| | Film (2) After Heating | 0.40 | 0.82 | 0.71 | 2.00 | 0.46 |
| | Film (3) After Heating | 2.00 | 2.80 | 2.68 | 3.47 | 4.21 |
| | Difference in Yellowness Index (2)-(1) | 0.01 | 0.01 | 0.01 | 1.58 | 0.01 |
| | Difference in Yellowness Index (3)-(1) | 1.61 | 1.99 | 1.98 | 3.05 | 3.76 |
| Evaluation [Relative Permittivity (25°C, 1 KHz)] | | 6.1 | - | - | 5.3 | - |

| | | | | | | |
|---|---|---|---|---|---|---|
| *1: Calculation from Measurement Result of ¹H-NMR *2: Calculation from Measurement Result of ¹³C-NMR | | | | | | |

### [Table 5]

**Table 5**

| | | Examples | | Comparative Examples | |
|---|---|---|---|---|---|
| | | 23 | 24 | 3 | 4 |
| Kind of Constitutional Unit (a2) | (a21) | Vinyl Acetate | Styrene | Vinyl Acetate | Styrene |
| | (a22) | - | - | - | - |
| Molar Ratio in Copolymer (a1)/(a21)/(a22) (*1) | | 50/50/0 | 50/50/0 | 50/50/0 | 50/50/0 |
| Each Content of Four Triad Structures in Copolymer (*2) | (a1)-(a1)-(a1) [(U-1)] (mol%) | 0.3 | 1.7 | 0.3 | 1.7 |
| | Total Content of (a1)-(a1)-(a2) (a2)-(a1)-(a1) [(U-2)] and [(U-3)] (mol%) | 4.8 | 4.3 | 4.8 | 4.3 |
| | (a2)-(a1)-(a2) [(U-4)] (mol%) | 94.9 | 94.0 | 94.9 | 94.0 |
| Thickness of Film (µm) | | 200 | 200 | 200 | 200 |
| Bronsted Acidic Compound (B) | Kind | p-Toluene sulfonic Acid | p-Toluene sulfonic Acid | p-Toluene sulfonic Acid | p-Toluene sulfonic Acid |
| | pKa | -1.3 | -1.3 | -1.3 | -1.3 |
| | Amount (ppm by mass) | 90,000 | 90,000 | 100,000 | 100,000 |

### [Table 5] (Continued)

**Table 5**

| | | Examples | | Comparative Examples | |
|---|---|---|---|---|---|
| | | 23 | 24 | 3 | 4 |
| Elemental Analysis of Film (% by mass) | C | 58 | 79 | 58 | 76 |
| | H | 4.9 | 5.5 | 4.9 | 5.4 |
| | O | 20 | 2.5 | 20 | 2.8 |
| | N | 16 | 14 | 15 | 14 |
| | S | 1.7 | 1.7 | 1.9 | 1.9 |
| | P | Lower Detection Limit | Lower Detection Limit | Lower Detection Limit | Lower Detection Limit |
| | Composition Ratio [S/N] | 0.1063 | 0.1214 | 0.1237 | 0.1357 |
| | Composition Ratio [P/N] | - | - | - | - |
| Evaluation [Yellowness Index (%)] | Film (1) Before Heating | 1.21 | 1.02 | 1.32 | 1.05 |
| | Film (2) After Heating | 1.24 | 1.04 | 1.35 | 1.07 |
| | Film (3) After Heating | 7.30 | 5.00 | 12.2 | 11.5 |
| | Difference in Yellowness Index (2)-(1) | 0.03 | 0.02 | 0.03 | 0.02 |
| | Difference in Yellowness Index (3)-(1) | 6.09 | 3.98 | 10.88 | 10.45 |
| Evaluation [Relative Permittivity (25°C, 1 KHz)] | | | | | |

| | | | | | |
|---|---|---|---|---|---|
| *1: Calculation from Measurement Result of ¹H-NMR *2: Calculation from Measurement Result of ¹³C-NMR | | | | | |

### [Table 6]

**Table 6**

| | Examples | | | | | | | |
|---|---|---|---|---|---|---|---|---|
| | 1 | 2 | 3 | 4 | 5 | 6 | 7 | 8 |
| Piezoelectricity Evaluation | Pass | Pass | Pass | Pass | Pass | Pass | Pass | Pass |

| | Examples | | | | | | | |
|---|---|---|---|---|---|---|---|---|
| | 9 | 10 | 11 | 12 | 16 | 17 | 18 | |
| Piezoelectricity Evaluation | Pass | Pass | Pass | Pass | Pass | Pass | Pass | |

As is clear from the results in Tables 1 to 5, each of the films using the resin composition of the present invention can suppress coloration even after heating and has excellent dielectric properties.

As is clear from the results in Table 6, each of the films of the present invention has piezoelectricity, and therefore can be suitably used for a touch panel application and the like.

## Claims

1. A resin composition comprising: a copolymer (A) containing a constitutional unit (a1) derived from 1,1-dicyanoethylene and a constitutional unit (a2) derived from a compound represented by the following general formula (I); and a Bronsted acidic compound (B), wherein a content of the Bronsted acidic compound (B) in the resin composition is 0.1 to 95,000 ppm by mass:
CH₂ = CR¹R² (I)
wherein, R¹ is one or more selected from a hydrogen atom, an alkyl group, a cycloalkyl group, an aryl group, an alkoxy group, and a halogen atom; and
R² is one or more selected from a hydrogen atom, an alkyl group, an alkoxy group, a carboxy group, an ester group represented by -COOR³, in which R³ is an alkyl group having 1 to 12 carbon atoms, an acid anhydride group, an acyl group represented by -COR⁴, in which R⁴ is an alkyl group having 1 to 12 carbon atoms, and an acyloxy group represented by - OCOR⁵, in which R⁵ is an alkyl group having 1 to 12 carbon atoms.

2. The resin composition according to Claim 1, wherein the compound represented by the general formula (I) is one or more selected from the group consisting of a vinyl ester, a (meth)acrylic acid ester, a styrene derivative, isobutylene, and propylene.

3. The resin composition according to Claim 1 or 2, wherein the Bronsted acidic compound (B) has an acid dissociation constant (pKa) of 4.8 or less.

4. The resin composition according to Claim 1 or 2, wherein the Bronsted acidic compound (B) is a compound having one or more selected from the group consisting of a phosphoric acid group, a carboxy group, a sulfonic acid group, and a phosphorus acid group.

5. The resin composition according to Claim 1 or 2, wherein the constitutional unit (a2) is composed of two different constitutional units of a constitutional unit (a21) derived from the compound represented by the general formula (I) and a constitutional unit (a22) derived from the compound represented by the general formula (I).

6. The resin composition according to Claim 4, wherein a composition ratio [S/N] of a sulfur atom to a nitrogen atom is 3.5×10⁻⁸ to 0.3.

7. The resin composition according to Claim 4, wherein a composition ratio [P/N] of a phosphorus atom to a nitrogen atom is 1.4×10⁻⁸ to 0.3.

8. A molded product using the resin composition according to Claim 1 or 2.

9. A film using the resin composition according to Claim 1 or 2.

10. The film according to Claim 9, wherein a yellowness index after heating at 160°C under normal pressure for 1 hour is 3.0% or less.

11. A conductive film obtained by laminating a conductive layer on the film according to Claim 9.

12. A film capacitor comprising the film according to Claim 9.

13. A film capacitor comprising the conductive film according to Claim 11.

14. A polarized material comprising the resin composition according to Claim 1 or 2.

15. A polarized material comprising the film according to Claim 9.

16. The polarized material according to Claim 14, comprising the resin composition, in which, in the general formula (I), R¹ contains H and R² contains an acyloxy group represented by -OCOR⁵, in which R⁵ is an alkyl group having 1 to 12 carbon atoms.

17. The polarized material according to Claim 15, comprising the resin composition, in which, in the general formula (I), R¹ contains H and R² contains an acyloxy group represented by -OCOR⁵, in which R⁵ is an alkyl group having 1 to 12 carbon atoms.

18. An electrostatic induction conversion device comprising the polarized material according to Claim 14.

19. An electrostatic induction conversion device comprising the polarized material according to Claim 15.

20. A touch panel comprising the electrostatic induction conversion device according to Claim 18.

21. A touch panel comprising the electrostatic induction conversion device according to Claim 19.
